# EUROPEAN PATENT APPLICATION

(11) **EP 4 462 521 A1**
(43) Date of publication of application: **13.11.2024**
(21) Application number: 22918739.8
(22) Date of filing: 28.11.2022
(51) Int. Cl.: H01M 4/96, H01M 8/18

(54) **ELECTRODE, BATTERY CELL, CELL STACK, AND REDOX-FLOW BATTERY SYSTEM**

(30) Priority: 06.01.2022 JP 2022000990
(71) Applicant: SUMITOMO ELECTRIC INDUSTRIES, LTD., Osaka-shi, Osaka 541-0041 (JP); TOYOBO MC Corporation, Osaka 530-0001 (JP)
(72) Inventor: OYA, Masayuki, Osaka-shi, Osaka 541-0041 (JP); KAWAGOE, Yoshiyasu, Osaka-shi, Osaka 541-0041 (JP); SAWADA, Shin-ichi, Osaka-shi, Osaka 541-0041 (JP); IGARASHI, Takashi, Otsu-shi, Shiga 520-0292 (JP); IWAHARA, Ryohei, Otsu-shi, Shiga 520-0292 (JP)
(74) Representative: Hoffmann Eitle
(86) International application number: PCT/JP2022/043803
(87) International publication number: WO 2023/132152

(57) **Abstract**

An electrode for use in a redox-flow battery system, wherein the electrode comprises a carbon fiber and a void, and a median diameter of the electrode based on pore volume determined by mercury porosimetry is at least 1.025 times a modal diameter of the electrode determined by mercury porosimetry.

## Description

### TECHNICAL FIELD

The present disclosure relates to an electrode, a battery cell, a cell stack, and a redox-flow battery system.

The present application claims the benefit of priority to Japanese Patent Application No. 2022-000990 filed on January 6, 2022, the entire contents of which are incorporated herein by reference.

### BACKGROUND ART

Redox-flow batteries are one type of rechargeable batteries in which the electrolyte is supplied to the electrode to cause battery reactions. For example, in the redox-flow battery disclosed by PTL 1, a carbon paper sheet is used as an electrode.

### CITATION LIST

### PATENT LITERATURE

PTL 1: Japanese National Patent Publication No. 2015-505148

### SUMMARY OF INVENTION

An electrode according to the present disclosure is
an electrode for use in a redox-flow battery system, the electrode comprising:
a carbon fiber; and
a void, wherein
a median diameter of the electrode based on pore volume determined by mercury porosimetry is at least 1.025 times a modal diameter of the electrode determined by mercury porosimetry.

### BRIEF DESCRIPTION OF DRAWINGS

Fig. 1 is a schematic perspective view illustrating an electrode of a redox-flow battery system according to an embodiment.
Fig. 2 is a schematic close-up view of a region A1 in Fig. 1.
Fig. 3 is a schematic close-up cross-sectional view illustrating a region A2 in a III-III cross section in Fig. 2.
Fig. 4 is a graph for describing Log differential pore volume distribution of an electrode of a redox-flow battery system according to an embodiment.
Fig. 5 is a schematic diagram illustrating the configuration of a redox-flow battery system according to an embodiment.
Fig. 6 is a schematic diagram illustrating the configuration of a cell stack of a redox-flow battery system according to an embodiment.
Fig. 7 is a schematic diagram illustrating the configuration of a measuring system used for measuring pressure loss of a redox-flow battery system in Test Examples.

### DETAILED DESCRIPTION

### [Problem to be Solved by the Present Disclosure]

Development of an electrode that is excellent in electrolyte flowability is demanded.

An object of the present disclosure is to provide an electrode that is excellent in electrolyte flowability.

### [Advantageous Effect of the Present Disclosure]

An electrode according to the present disclosure is excellent in electrolyte flowability.

### [Description of Embodiments]

First, aspects of the present disclosure will be described below.
(1) An electrode according to an aspect of the present disclosure is
   an electrode for use in a redox-flow battery system, the electrode comprising:
   a carbon fiber; and
   a void, wherein
   a median diameter of the electrode based on pore volume determined by mercury porosimetry is at least 1.025 times a modal diameter of the electrode determined by mercury porosimetry.
   In an electrode in which the median diameter is at least 1.025 times the modal diameter, as compared to an electrode in which the median diameter is less than 1.025 times the modal diameter, the number of large voids is high. In the above-mentioned configuration in which the median diameter is at least 1.025 times the modal diameter, electrolyte flowability is excellent. As a result, in the above-mentioned configuration, diffusive resistance tends to be low.
(2) In the electrode according to (1) above,
   the modal diameter may be 80 µm or less.
   An electrode in which the modal diameter is 80 µm or less has excellent battery reactivity.
(3) In the electrode according to (1) above or (2) above,
   the median diameter may be 80 µm or less.
   An electrode in which the median diameter is 80 µm or less has excellent battery reactivity.
(4) In the electrode according to any one of (1) above to (3) above,
   on Log differential pore volume distribution of the electrode determined by mercury porosimetry, a symmetry factor S_{0.1h} of a curve of a highest peak may be 1.5 or more.

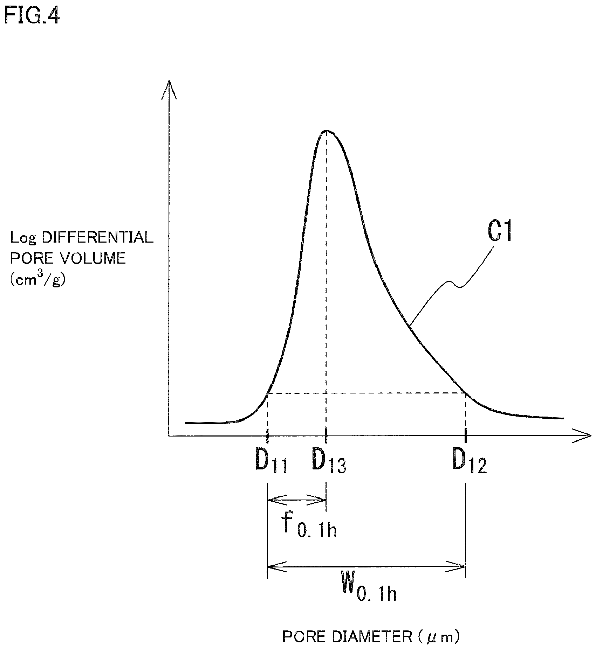

As described below in detail referring to Fig. 4, the symmetry factor S_{0.1h} is determined by (width W_{0.1h})/(2×(width f_{0.1h})). Width W_{0.1h} is the difference between a first pore diameter D₁₁ and a second pore diameter D₁₂. Width f_{0.1h} is the difference between first pore diameter D₁₁ and a third pore diameter D₁₃. First pore diameter D₁₁ is the smaller of the pore diameters corresponding to 10% of the height of the highest peak on the curve. Second pore diameter D₁₂ is the larger of the pore diameters corresponding to 10% of the height of the highest peak on the curve. Third pore diameter D₁₃ is the pore diameter for the highest peak.

In an electrode in which the symmetry factor S_{0.1h} is 1.5 or more, as compared to an electrode in which the symmetry factor S_{0.1h} is less than 1.5, the number of large voids is high. In the above-mentioned configuration in which the symmetry factor S_{0.1h} is 1.5 or more, electrolyte flowability is excellent.

(5) In the electrode according to any one of (1) above to (4) above,
a porosity of the electrode determined by mercury porosimetry may be 60% or more.

An electrode in which the porosity is 60% or more has more voids, as compared to an electrode in which the porosity is less than 60%. In the above-mentioned configuration in which the porosity is 60% or more, electrolyte flowability is excellent.

(6) In the electrode according to any one of (1) above to (5) above,
the carbon fiber comprises a plurality of carbon fibers, and
an average diameter of the plurality of carbon fibers may be from 2 µm to 30 µm.

When the average diameter of the plurality of carbon fibers is 2 µm or more, the strength of the electrode is high. When the average diameter of the plurality of carbon fibers is 30 µm or less, the surface area of the carbon fibers per unit weight is large. This allows for sufficient battery reactions to occur in the electrode.

(7) A battery cell according to an aspect of the present disclosure is a battery cell for use in a redox-flow battery system, and comprises the electrode according to any one of (1) above to (6) above.

In the above-mentioned configuration which comprises an electrode that is excellent in electrolyte flowability, diffusive resistance tends to be low.

(8) A cell stack according to an aspect of the present disclosure is a cell stack for use in a redox-flow battery system, and comprises a plurality of the battery cells according to (7) above.

In the above-mentioned configuration which comprises a plurality of the above-mentioned battery cells, electrolyte flowability is excellent. As a result, in the above-mentioned configuration, diffusive resistance tends to be low.

(9) A redox-flow battery system according to an aspect of the present disclosure comprises the battery cell according to (7) above or the cell stack according to (8) above.

In the above-mentioned configuration which comprises the above-mentioned battery cell or the above-mentioned cell stack, electrolyte flowability is excellent. As a result, in the above-mentioned configuration, diffusive resistance tends to be low.

(10) The redox-flow battery system according to (9) above may comprise a positive electrolyte and a negative electrolyte that are supplied to the battery cell,
the positive electrolyte may include manganese ions, and
the negative electrolyte may include titanium ions.

The above-mentioned configuration has a high electromotive force.

### «Detailed Description of Embodiments»

In the following, a redox-flow battery system according to an embodiment of the present disclosure is described in detail. Hereinafter, a redox-flow battery system may also be expressed as an RF battery system. In the drawings, members that have the same name are given the same reference numeral.

### <<Embodiments>>

### [RF Battery System]

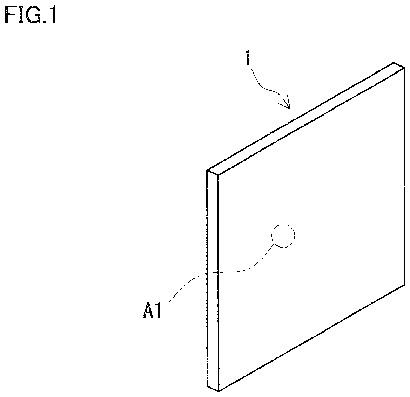

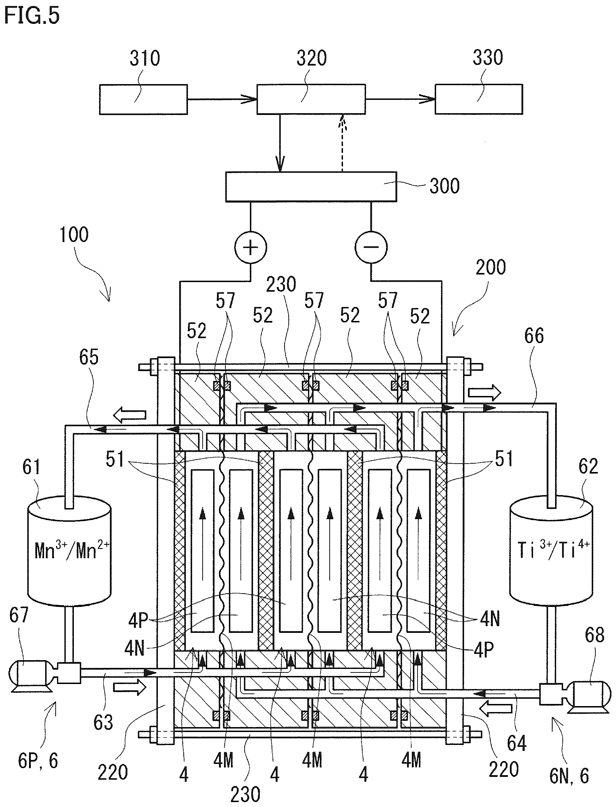

Referring to Fig. 1 to Fig. 6, an RF battery system 100 according to an embodiment will be described. As illustrated in Fig. 5, RF battery system 100 comprises a battery cell 4 and a circulation mechanism 6. Battery cell 4 has a membrane 4M, a positive electrode 4P, and a negative electrode 4N. Membrane 4M is interposed between positive electrode 4P and negative electrode 4N. At least one of positive electrode 4P and negative electrode 4N is configured by an electrode 1 illustrated in Fig. 1. Circulation mechanism 6 circulates an electrolyte to battery cell 4. One of the characteristics of RF battery system 100 according to the present embodiment is that electrode 1 has a particular structure. In the following, the outline and the fundamental configuration of RF battery system 100, as well as the detailed configuration of RF battery system 100 according to the present embodiment will be described in this order.

### [Outline of RF Battery System]

RF battery system 100 illustrated in Fig. 5 is charged with and stores the electric power generated in an electric power generating member 310, discharges the electric power thus stored, and supplies it to a load 330. Typically, RF battery system 100 is connected to an AC/DC converter 300. AC/DC converter 300 is connected to a transformer facility 320. Transformer facility 320 is connected to electric power generating member 310 and load 330. Electric power generating member 310 is a photovoltaic power generator, a wind power generator, or other ordinary power plants, for example. Load 330 is an electric power consumer, for example. The solid arrow extending from transformer facility 320 toward AC/DC converter 300 represents charging. The broken arrow extending from AC/DC converter 300 toward transformer facility 320 represents discharging. RF battery system 100 uses a positive electrolyte and a negative electrolyte. Each of the positive electrolyte and the negative electrolyte contains metal ions, as an active material, the valence of which changes along with oxidation and reduction. Charging and discharging of RF battery system 100 proceed based on the difference between the redox potential of ions included in the positive electrolyte and the redox potential of ions included in the negative electrolyte. RF battery system 100 is used for the purpose of load leveling, instantaneous voltage drop compensation, emergency power source application, or output smoothing of natural energy, for example. The natural energy is the energy that is obtained by photovoltaic power generation or wind power generation, for example.

### [Fundamental Configuration of RF Battery]

Battery cell 4 in RF battery system 100 is divided by membrane 4M into a positive electrode cell and a negative electrode cell. Membrane 4M is an ionexchange membrane that does not allow transmission of electrons but allows transmission of, for example, hydrogen ions. The positive electrode cell internally includes positive electrode 4P. The negative electrode cell internally includes negative electrode 4N. Circulation mechanism 6 in RF battery system 100 comprises a positive electrode circulation mechanism 6P and a negative electrode circulation mechanism 6N. Positive electrode circulation mechanism 6P circulates the positive electrolyte to the positive electrode cell. Negative electrode circulation mechanism 6N circulates the negative electrolyte to the negative electrode cell.

### [Electrode]

As described above, electrode 1 according to the present embodiment illustrated in Fig. 1 configures at least one of positive electrode 4P and negative electrode 4N illustrated in Fig. 5. Electrode 1 contributes to battery reactions. Electrode 1 has a sheet-like shape. In the present embodiment, the number of electrode 1 is one.

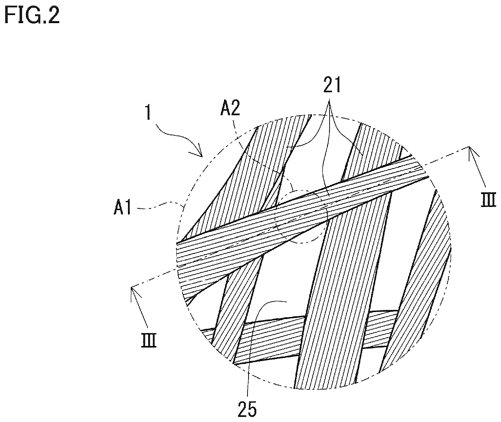

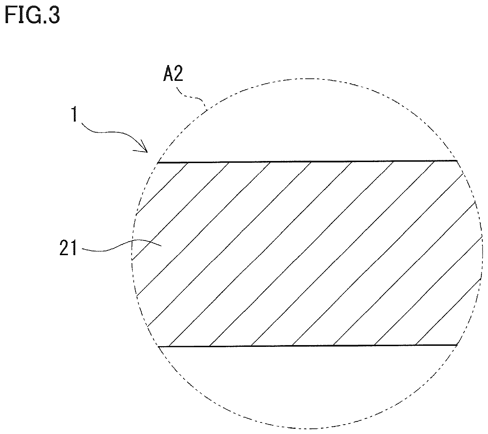

As illustrated in Fig. 2, electrode 1 includes carbon fibers 21 as a main component. The expression "includes carbon fibers 21 as a main component" means that the ratio of the weight of carbon fibers 21 to the weight of electrode 1 is more than 40%. Further, the ratio of the weight of carbon fibers 21 to the weight of electrode 1 may be 50% or more, or 60% or more, or particularly 70% or more. In the present embodiment, electrode 1 includes a plurality of carbon fibers 21. The plurality of carbon fibers 21 form a three-dimensional network structure. Gaps in the network form voids 25. Typically, voids 25 are provided between the plurality of carbon fibers 21. Electrode 1 may include at least one of a binder, carbon particles, a catalyst, a hydrophilic material, and a hydrophobic material. The binder secures carbon fibers 21 to each other, and also secures carbon particles on carbon fibers 21. The carbon particles increase the surface area of electrode 1. The catalyst facilitates battery reactions. In electrode 1 according to the present embodiment, as illustrated in Fig. 3, carbon fibers 21 do not have carbon particles secured thereon. Electrode 1 satisfies a pore diameter dimensional relationship where the median diameter based on pore volume is at least 1.025 times the modal diameter. In other words, in electrode 1, the difference between the median diameter and the modal diameter is at least 2.5% of the modal diameter. The difference between the median diameter and the modal diameter refers to ((median diameter)-(modal diameter)).

The median diameter based on pore volume is obtained from a cumulative pore volume curve of cumulative pore distribution based on mercury porosimetry. In the cumulative pore distribution, the X axis represents pore diameter and the Y axis represents pore volume. The median diameter based on pore volume is a pore diameter that corresponds to the midpoint between the smallest value and the largest value of the pore volume on the cumulative pore volume curve. The measurement range of the pore diameter on the X axis is defined by the upper limit and the lower limit measureable by mercury porosimetry. The upper limit corresponds to the smallest value of the pore volume on the Y axis. The lower limit corresponds to the largest value of the pore volume on the Y axis. The upper limit is usually about 500 µm. The lower limit is usually about 0.003 µm. The smallest value of the pore volume on the Y axis is usually 0 (zero). Herein, a median diameter based on pore volume may be simply referred to as a median diameter. The modal diameter is a pore diameter for the highest derivative value on the differential pore distribution based on mercury porosimetry.

In electrode 1 in which the median diameter is at least 1.025 times the modal diameter, as compared to an electrode in which the median diameter is less than 1.025 times the modal diameter, the number of large voids 25 is high. A large electrode 1 in which the median diameter is at least 1.025 times the modal diameter is excellent in electrolyte flowability.

Further, the median diameter may be at least 1.03 times the modal diameter, particularly at least 1.05 times the modal diameter. The median diameter is at most 1.5 times the modal diameter, further at most 1.3 times the modal diameter, particularly at most 1.2 times the modal diameter, for example. In other words, the median diameter is from 1.025 times to 1.5 times the modal diameter, further from 1.03 times to 1.3 times the modal diameter, particularly from 1.05 times to 1.2 times the modal diameter. Further, the difference between the median diameter and the modal diameter may be at least 3% of the modal diameter, particularly at least 5% of the modal diameter. The difference between the median diameter and the modal diameter is at most 50% of the modal diameter, further at most 30% of the modal diameter, particularly at most 20% of the modal diameter, for example. In other words, the difference between the median diameter and the modal diameter is from 2.5% to 50% of the modal diameter, further from 3% to 30% of the modal diameter, particularly from 5% to 20% of the modal diameter.

The median diameter is 80 µm or less, for example. Electrode 1 in which the median diameter is 80 µm or less has excellent battery reactivity. Further, the median diameter is 75 µm or less, or 60 µm or less, or 55 µm or less, or particularly 50 µm or less. The lower limit to the median diameter is 3 µm, for example. In other words, the median diameter is from 3 µm to 80 µm, further from 10 µm to 75 µm, particularly from 20 µm to 60 µm.

The modal diameter is 80 µm or less, for example. Electrode 1 in which the modal diameter is 80 µm or less has excellent battery reactivity. Further, the modal diameter is 75 µm or less, or 60 µm or less, or 55 µm or less, or particularly 50 µm or less. The lower limit to the modal diameter is 2 µm, for example. In other words, the modal diameter is from 2 µm to 80 µm, further from 10 µm to 75 µm, particularly from 20 µm to 60 µm.

The symmetry factor S_{0.1h} of the curve is 1.5 or more, for example. Referring to Fig. 4, the symmetry factor S_{0.1h} of a curve C1 will be described. Curve C1 in Fig. 4 is a graph of Log differential pore volume distribution of electrode 1 determined by mercury porosimetry. The horizontal axis in Fig. 4 represents the pore diameter (µm) of electrode 1. The horizontal axis means that the pore diameter becomes larger as it goes toward the right on the paper. The vertical axis in Fig. 4 represents the Log differential pore volume (cm³/g) of electrode 1. The vertical axis means that the Log differential pore volume becomes larger as it goes upward on the paper. Fig. 4 is provided for the purpose of clearly explaining the symmetry factor S_{0.1h} of curve C1, and it does not necessarily give the actual curve C 1. As illustrated in Fig. 4, curve C1 of electrode 1 has a single peak.

The symmetry factor S_{0.1h} is determined by "(width W_{0.1h})/(2×(width f_{0.1h}))". Width W_{0.1h} is the difference between a first pore diameter D₁₁ and a second pore diameter D₁₂. Width f_{0.1h} is the difference between first pore diameter D₁₁ and a third pore diameter D₁₃. First pore diameter D₁₁ is the smaller of the pore diameters corresponding to 10% of the height of the highest peak on curve C1. Second pore diameter D₁₂ is the larger of the pore diameters corresponding to 10% of the height of the highest peak on curve C1. Third pore diameter D₁₃ is the pore diameter for the highest peak on curve C1.

In electrode 1 in which the symmetry factor S_{0.1h} is 1.5 or more, as compared to an electrode in which the symmetry factor S_{0.1h} is less than 1.5, the number of large voids 25 is high. Electrode 1 in which the symmetry factor S_{0.1h} is 1.5 or more is excellent in electrolyte flowability. Further, the symmetry factor S_{0.1h} is 1.6 or more, particularly 1.7 or more. The symmetry factor S_{0.1h} is 15 or less, or further 10 or less, for example. In other words, the symmetry factor S_{0.1h} is from 1.5 to 15, further from 1.6 to 10, particularly from 1.7 to 10.

The average diameter of the plurality of carbon fibers 21 is from 2 µm to 30 µm, for example. When the average diameter of the plurality of carbon fibers 21 is 2 µm or more, the strength of electrode 1 is high. When the average diameter of the plurality of carbon fibers 21 is 30 µm or less, the surface area of carbon fibers 21 per unit weight is large. This allows for sufficient battery reactions to occur in electrode 1. Further, the average diameter of the plurality of carbon fibers 21 is from 5 µm to 25 µm, particularly from 7 µm to 20 µm.

The average diameter of the plurality of carbon fibers 21 is the average of the diameters of circles that have the same area as the cross-sectional area of respective carbon fibers 21, and is determined in the below-described manner. Electrode 1 is cut in the thickness direction, to expose cross sections of the plurality of carbon fibers 21. In the cross section of electrode 1, five or more fields of view are selected under a microscope. As the microscope, a scanning electron microscope (SEM) is used. The magnification is from 500 times to 3000 times. For three or more carbon fibers 21 per one examination field of view, the diameter of a circle that has the same area as the cross-sectional area thereof is determined. The diameters of the circles determined in all the examination fields of view are averaged.

The mass per unit area of electrode 1 is from 20 g/m² to 400 g/m², for example. Electrode 1 in which the mass per unit area is 20 g/m² or more tends to have many contact points between carbon fibers 21. Therefore, electrode 1 tends to have an enhanced conductivity. In electrode 1 in which the mass per unit area is 400 g/m² or less, voids 25 tend to be ensured. Therefore, electrode 1 is excellent in electrolyte flowability. Further, the mass per unit area of electrode 1 is from 25 g/m² to 300 g/m², particularly from 30 g/m² to 200 g/m². The mass per unit area is determined by measuring the weight per unit area.

The porosity of electrode 1 is 60% or more, for example. The porosity is determined by mercury porosimetry. The porosity refers to the proportion of the volume of the pores to the volume of electrode 1 including the pores. Electrode 1 in which the porosity is 60% or more has more voids 25, as compared to an electrode in which the porosity is less than 60%. This electrode 1 is excellent in electrolyte flowability. The upper limit to the porosity of electrode 1 is 99%, for example. Electrode 1 in which the porosity is 99% or less has excellent battery reactivity. The porosity of electrode 1 is from 60% to 99%, or from 60% to 95%, further from 65% to 93%, particularly from 75% to 90%.

Electrode 1 is one selected from the group consisting of nonwoven fabric, woven fabric, and paper. The nonwoven fabric is formed of independent carbon fibers 21 entangled together. The woven fabric is formed of the warp and the weft of carbon fibers 21 woven alternately. The paper has the plurality of carbon fibers 21 and a binder for securing the carbon fibers 21.

Electrode 1 according to the present embodiment is a nonwoven fabric. For example, electrode 1 according to the present embodiment is formed of carbon fibers 21 entangled together by needle-punching, water punching, and/or stitch bonding. For example, electrode 1 according to the present embodiment is obtained by adjusting, as appropriate, the average diameter of carbon fibers 21, the average length of carbon fibers 21, the mass per unit area, and the entangling conditions.

### [Cell Stack]

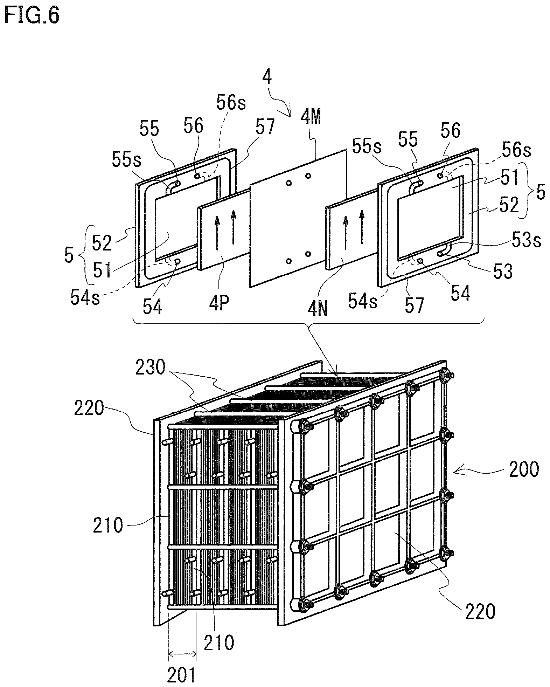

Battery cell 4 is usually formed inside a structure called a cell stack 200, as illustrated in Fig. 5 and in the lower drawing of Fig. 6. Cell stack 200 comprises sub stacks 201, two end plates 220, and a fastening mechanism 230. Cell stack 200 illustrated in the lower drawing of Fig. 6 has a configuration where it comprises a plurality of sub stacks 201. As illustrated in the lower drawing of Fig. 6, each sub stack 201 comprises a stack and two supply/drainage plates 210. As illustrated in Fig. 5 and in the upper drawing of Fig. 6, the stack is formed by stacking multiple sets of a cell frame 5, positive electrode 4P, membrane 4M, and negative electrode 4N in this order. As illustrated in the lower drawing of Fig. 6, supply/drainage plates 210 are placed at both ends of the stack. To supply/drainage plates 210, a supply tube 63 and a discharge tube 65 of positive electrode circulation mechanism 6P, as well as a supply tube 64 and a discharge tube 66 of negative electrode circulation mechanism 6N are connected, which are described below. Two end plates 220 sandwich the plurality of sub stacks 201 from outside of the two outermost sub stacks 201. Fastening mechanism 230 fastens both end plates 220.

### [Cell Frame]

As illustrated in Fig. 6, cell frame 5 comprises a bipolar plate 51 and a frame member 52. Frame member 52 surrounds the outer circumference of bipolar plate 51. Between bipolar plates 51 of cell frames 5 that are adjacent to each other, a single battery cell 4 is formed. Bipolar plate 51 has a surface facing positive electrode 4P and a surface facing negative electrode 4N. At frame member 52, liquid supply manifolds 53, 54, liquid supply slits 53s, 54s, liquid discharge manifolds 55, 56, and liquid discharge slits 55s, 56s are formed, which are described below. Between frame members 52, a ring-shaped sealing member 57 is placed in a ring-shaped sealing groove.

### [Positive Electrode Circulation Mechanism, Negative Electrode Circulation Mechanism]

As illustrated in Fig. 5, positive electrode circulation mechanism 6P comprises a positive electrolyte tank 61, supply tube 63, discharge tube 65, and a pump 67. Positive electrolyte tank 61 stores the positive electrolyte. Through supply tube 63 and discharge tube 65, the positive electrolyte flows. Supply tube 63 connects positive electrolyte tank 61 with the positive electrode cell. Discharge tube 65 connects the positive electrode cell with positive electrolyte tank 61. Pump 67 pressure feeds the positive electrolyte from positive electrolyte tank 61. Pump 67 is provided at some midpoint on the supply tube 63.

Negative electrode circulation mechanism 6N comprises a negative electrolyte tank 62, supply tube 64, discharge tube 66, and a pump 68. Negative electrolyte tank 62 stores the negative electrolyte. Through supply tube 64 and discharge tube 66, the negative electrolyte flows. Supply tube 64 connects negative electrolyte tank 62 with the negative electrode cell. Discharge tube 66 connects the negative electrode cell with negative electrolyte tank 62. Pump 68 pressure feeds the negative electrolyte from negative electrolyte tank 62. Pump 68 is provided at some midpoint on the supply tube 64.

During charging or discharging operation, the positive electrolyte and the negative electrolyte flow in the manner described below. By pump 67, the positive electrolyte flows from positive electrolyte tank 61 through supply tube 63, and is supplied to the positive electrode cell. The positive electrolyte flows from liquid supply manifold 53 through liquid supply slit 53s illustrated in the upper drawing of Fig. 6, and is supplied to positive electrode 4P. The positive electrolyte thus supplied to positive electrode 4P flows from the lower edge of positive electrode 4P toward the upper edge, as shown by the arrows in the upper drawing of Fig. 6. The positive electrolyte thus flown through positive electrode 4P flows through liquid discharge slit 55s, and is discharged into liquid discharge manifold 55. The positive electrolyte flows from the positive electrode cell through discharge tube 65, and is discharged into positive electrolyte tank 61. By pump 68, the negative electrolyte flows from negative electrolyte tank 62 through supply tube 64, and is supplied to the negative electrode cell. The negative electrolyte flows from liquid supply manifold 54 through liquid supply slit 54s, and is supplied to negative electrode 4N. The negative electrolyte thus supplied to negative electrode 4N flows from the lower edge of negative electrode 4N toward the upper edge, as shown by the arrows in the upper drawing of Fig. 6. The negative electrolyte thus flown through negative electrode 4N flows through liquid discharge slit 56s, and is discharged into liquid discharge manifold 56. The negative electrolyte flows from the negative electrode cell through discharge tube 66, and is discharged into negative electrolyte tank 62. By the supplying and discharging, the positive electrolyte and the negative electrolyte are circulated to the positive electrode cell and the negative electrode cell. During standby in which neither charging nor discharging takes place, pump 67 and pump 68 are halted. That is, the positive electrolyte and the negative electrolyte are not circulated.

### [Electrolyte]

A positive electrode active material included in the positive electrolyte is one or more types selected from the group consisting of manganese ions, vanadium ions, iron ions, polyacids, quinone derivatives, and amines. A negative electrode active material included in the negative electrolyte is one or more types selected from the group consisting of titanium ions, vanadium ions, chromium ions, polyacids, quinone derivatives, and amines. When the positive electrolyte includes manganese ions and the negative electrolyte includes titanium ions, RF battery system 100 tends to have a high electromotive force. In Fig. 5, the ions included in the positive electrolyte are manganese (Mn) ions and the ions included in the negative electrolyte are titanium (Ti) ions. Each of a solvent of the positive electrolyte and a solvent of the negative electrolyte is, for example, an aqueous solution that includes one or more acids, or salt(s) of one or more acids, selected from the group consisting of sulfuric acid, phosphoric acid, nitric acid, and hydrochloric acid.

RF battery system 100 according to the present embodiment comprises electrode 1 that is excellent in electrolyte flowability, and therefore tends to have a low diffusive resistance.

### «Test Examples»

A plurality of electrodes were prepared, and battery reactivity and electrolyte flowability were evaluated.

### [Sample No. 1 to Sample No. 6]

The electrode of the battery cell of Sample No. 1 to Sample No. 6 each was a single electrode that included a plurality of carbon fibers and voids. The average diameter of the carbon fibers of each sample is within the range of 2 µm to 30 µm. The average diameter of the carbon fibers was determined by the method described in the embodiment section. The mass per unit area of the electrode of Sample No. 1 is 110 g/m². The mass per unit area of the electrode of Sample No. 2 is 120 g/m². The mass per unit area of the electrode of Sample No. 3 is 80 g/m². The mass per unit area of the electrode of Sample No. 4 is 90 g/m². The mass per unit area of the electrode of Sample No. 5 is 90 g/m². The mass per unit area of the electrode of Sample No. 6 is 100 g/m². The mass per unit area was determined by the method described in the embodiment section.

The median diameter based on pore volume, the modal diameter, the symmetry factor, and the porosity of the electrode of each sample are shown in Table 1. These values were measured by mercury porosimetry. For the measurement, a pore distribution measurement apparatus AutoPore IV 9520 manufactured by Shimadzu Corporation-Micromeritics Instrument Corporation was used. In Table 1, the value of the modal diameter of the electrode of each sample multiplied by 1.025 is also given. The value of the modal diameter multiplied by 1.025 has been rounded to three decimal place.

Each electrode was cut into a strip having a size of about 12.5 mm×25 mm, which was used as a measurement sample. The weight of the measurement sample was approximately from 0.03 g to 0.24 g. The measurement sample was placed in a 5-cc cell that was specifically designed for powder. The volume of the stem of the powder cell is 0.4 cc. The measurement was carried out under the conditions of an initial pressure of about 3.7 kPa. "About 3.7 kPa" corresponds to about 0.5 psia (pound-force per square inch absolute), and corresponds to a pore diameter of about 340 µm. The mercury parameters were set at the default of the apparatus, namely a mercury contact angle of 130 degrees and a mercury surface tension of 485 dynes/cm (485 mN/m).

### [Sample No. 101]

The electrode of the battery cell of Sample No. 101 was a single electrode. The electrode of Sample No. 101 includes carbon fibers. The median diameter based on pore volume, the modal diameter, the symmetry factor, and the porosity of the electrode of Sample No. 101 are shown in Table 1. In Table 1, the value of the modal diameter of the electrode of Sample No. 101 multiplied by 1.025 is also given. The value of the modal diameter multiplied by 1.025 has been rounded to three decimal place.

**[Table 1]**

| Sample No. | Median diameter | Modal diameter | Modal diameter × 1.025 | Symmetry factor | Porosity |
|---|---|---|---|---|---|
| | µm | µm | µm | | % |
| 1 | 40.1 | 34.5 | 35.36 | 7.96 | 94 |
| 2 | 49.8 | 45.6 | 46.74 | 2.52 | 93 |
| 3 | 44.3 | 42.3 | 43.36 | 3.41 | 88 |
| 4 | 46.6 | 44.2 | 45.31 | 3.05 | 88 |
| 5 | 70.3 | 66.5 | 68.16 | 3.94 | 86 |
| 6 | 68.8 | 64.9 | 66.52 | 2.23 | 81 |
| 101 | 24.1 | 23.6 | 24.19 | 1.42 | 84 |

### [Evaluation of Battery Reactivity]

The battery cell of each sample was used to produce a single-cell battery, and various resistivities described below were measured. The single-cell battery is a battery that comprises a single positive electrode, a single membrane, and a single negative electrode. The single-cell battery was formed by stacking a first cell frame, a positive electrode, a membrane, a negative electrode, and a second cell frame in this order. The membrane is sandwiched between the positive electrode and the negative electrode. The first cell frame is placed so that a bipolar plate of the first cell frame comes into contact with the positive electrode. The second cell frame is placed so that a bipolar plate of the second cell frame comes into contact with the negative electrode. As the positive electrode, a carbon paper sheet was used. As the negative electrode, the electrode of each sample was used. As the positive electrolyte, a manganese sulfate solution that included manganese ions as an active material was used. As the negative electrolyte, a titanium sulfate solution that included titanium ions as an active material was used.

The battery cell of each sample was subjected to constant-current charging and discharging at a current density of 100 mA/cm². In this test, three cycles of charging and discharging were carried out. In this test, charging was switched to discharging when a previously defined switching voltage was reached, and discharging was switched to charging when a previously defined switching voltage was reached. The switching voltage for switching from charging to discharging was 1.62 V. The switching voltage for switching from discharging to charging was 1.0 V. In this manner, charging and discharging of the RF battery of each sample were accomplished.

After the constant-current charging and discharging, another charging was carried out in the manner described below, and the conductive resistivity (Ω·cm²), the charge-transfer resistivity (Ω·cm²), and the diffusive resistivity (Ω·cm²) of each sample were determined by the methods described below. Results are given in Table 2, together with the cell resistivity (Ω·cm²). Cell resistivity is the sum of conductive resistivity, charge-transfer resistivity, and diffusive resistivity. The charging here was carried out to reach a midpoint SOC. The midpoint SOC is an average value of the sum of the highest SOC value and the lowest SOC value during the constant-current charging and discharging.

### [Conductive Resistivity]

The conductive resistivity was an impedance at the time when the measurement frequency in the alternating-current impedance method was 1 kHz.

### [Charge-Transfer Resistivity]

The charge-transfer resistivity was measured by an alternating-current impedance method. For the measurement of the charge-transfer resistivity, a commercially-available measurement apparatus was used, under a bias at a value around the open circuit voltage, at a voltage amplitude of 10 mV, at a measurement frequency within the range of 10 kHz to 10 mHz.

### [Diffusive Resistivity]

In the same manner as for the charge-transfer resistivity, the diffusive resistivity was measured by an alternating-current impedance method.

### [Evaluation of Electrolyte Flowability]

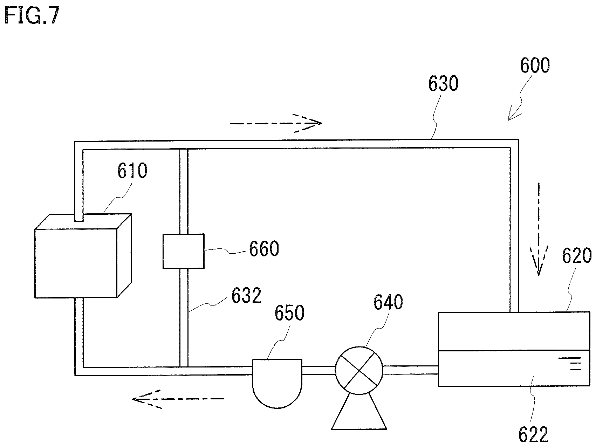

With the use of a measuring system 600 illustrated in Fig. 7, pressure loss ΔP of each sample was measured. Measuring system 600 comprises a measurement cell 610, a fluid tank 620, a pipe 630, a pump 640, a flowmeter 650, and a differential pressure gauge 660.

Measurement cell 610 is a single-cell battery that has the same structure as the single-cell battery used in the above-described measurement of various resistivities. Fluid tank 620 stores a fluid 622 that is to be supplied to the electrode inside the measurement cell 610. Fluid 622 is water, for example. Pipe 630 connects fluid tank 620 with measurement cell 610. Pump 640 is provided to pipe 630, and pressure feeds fluid 622 from fluid tank 620 to measurement cell 610. Fluid 622 discharged from measurement cell 610 flows through pipe 630 back to fluid tank 620. In this manner, by pump 640 and pipe 630, fluid 622 inside the fluid tank 620 is circulated and supplied to measurement cell 610. The dash-dot arrows in Fig. 7 represent the direction of flow of fluid 622. Flowmeter 650 is placed on pipe 630, at a position downstream of pump 640 and upstream of measurement cell 610. Flowmeter 650 measures the flow rate of fluid 622 discharged from pump 640. On pipe 630, at a position downstream of flowmeter 650, a branch pipe 632 for bypassing measurement cell 610 is provided. Differential pressure gauge 660 is provided on branch pipe 632. Moreover, differential pressure gauge 660 is provided in parallel with measurement cell 610.

Differential pressure gauge 660 measures the difference (P₀-P₁) between a pressure P₀ of fluid 622 supplied to measurement cell 610 and a pressure P₁ of fluid 622 discharged from measurement cell 610. Pressure loss ΔP is the difference between these pressures, (P₀-P₁). The lower the pressure loss ΔP is, the more excellent in electrolyte flowability the measurement cell 610 is considered to be. Results of the pressure loss of each sample are shown in Table 2. The result of the pressure loss in Table 2 is expressed as a value relative to the pressure loss ΔP of Sample No. 1, which is regarded as 1.0.

**[Table 2]**

| Sample No. | Conductive resistivity | Charge-transfer resistivity | Diffusive resistivity | Cell resistivity | Pressure loss |
|---|---|---|---|---|---|
| | Ω·cm² | Ω·cm² | Ω·cm² | Ω·cm² | |
| 1 | 0.25 | 0.19 | 0.16 | 0.60 | 1.0 |
| 2 | 0.25 | 0.22 | 0.18 | 0.65 | 1.0 |
| 3 | 0.23 | 0.15 | 0.12 | 0.50 | 1.1 |
| 4 | 0.24 | 0.17 | 0.14 | 0.55 | 1.1 |
| 5 | 0.25 | 0.19 | 0.13 | 0.56 | 1.1 |
| 6 | 0.20 | 0.19 | 0.09 | 0.48 | 1.1 |
| 101 | 0.22 | 0.23 | 0.35 | 0.80 | 1.3 |

Referring to Table 2, Sample No. 1 to Sample No. 6 had low diffusive resistivity as compared to Sample No. 101. The difference between the diffusive resistivity of each of Sample No. 1 to Sample No. 6 and the diffusive resistivity of Sample No. 101 was greater than the difference between the conductive resistivity of each of Sample No. 1 to Sample No. 6 and the conductive resistivity of Sample No. 101. The difference between the diffusive resistivity of each of Sample No. 1 to Sample No. 6 and the diffusive resistivity of Sample No. 101 was greater than the difference between the charge-transfer resistivity of each of Sample No. 1 to Sample No. 6 and the charge-transfer resistivity of Sample No. 101. This indicates that the diffusive resistivity lowering effect of Sample No. 1 to Sample No. 6 was greater than that of Sample No. 101. The pressure loss of each of Sample No. 1 to Sample No. 6 was smaller than that of Sample No. 101. Due to the great diffusive resistivity lowering effect and the small pressure loss as compared to Sample No. 101, Sample No. 1 to Sample No. 6 were found to be particularly excellent in electrolyte flowability.

Sample No. 1 to Sample No. 6 had low cell resistivity as compared to Sample No. 101. This indicates that Sample No. 1 to Sample No. 6 are also excellent in battery reactivity as compared to Sample No. 101.

It is intended that the scope of the present invention is defined by claims, not by these examples, and encompasses all modifications and variations equivalent in meaning and scope to the claims.

### REFERENCE SIGNS LIST

100 RF battery system
1 electrode
21 carbon fiber, 25 void
4 battery cell, 4M membrane, 4P positive electrode, 4N negative electrode
5 cell frame, 51 bipolar plate, 52 frame member
53, 54 liquid supply manifold, 53s, 54s liquid supply slit
55, 56 liquid discharge manifold, 55s, 56s liquid discharge slit
57 sealing member
6 circulation mechanism, 6P positive electrode circulation mechanism, 6N negative electrode circulation mechanism
61 positive electrolyte tank, 62 negative electrolyte tank
63, 64 supply tube, 65, 66 discharge tube, 67, 68 pump
200 cell stack, 201 sub stack
210 supply/drainage plate, 220 end plate, 230 fastening mechanism
300 AC/DC converter, 310 electric power generating member
320 transformer facility, 330 load
600 measuring system, 610 measurement cell, 620 fluid tank
622 fluid, 630 pipe, 632 branch pipe, 640 pump
650 flowmeter, 660 differential pressure gauge
C1 curve

## Claims

1. An electrode for use in a redox-flow battery system, the electrode comprising:
a carbon fiber; and
a void, wherein
a median diameter of the electrode based on pore volume determined by mercury porosimetry is at least 1.025 times a modal diameter of the electrode determined by mercury porosimetry.

2. The electrode according to claim 1, wherein the modal diameter is 80 µm or less.

3. The electrode according to claim 1 or 2, wherein the median diameter is 80 µm or less.

4. The electrode according to any one of claims 1 to 3, wherein on Log differential pore volume distribution of the electrode determined by mercury porosimetry, a symmetry factor S_{0.1h} of a curve of a highest peak is 1.5 or more.

5. The electrode according to any one of claims 1 to 4, wherein a porosity of the electrode determined by mercury porosimetry is 60% or more.

6. The electrode according to any one of claims 1 to 5, wherein
the carbon fiber comprises a plurality of carbon fibers, and
an average diameter of the plurality of carbon fibers is from 2 µm to 30 µm.

7. A battery cell for use in a redox-flow battery system, the battery cell comprising the electrode according to any one of claims 1 to 6.

8. A cell stack for use in a redox-flow battery system, the cell stack comprising a plurality of the battery cells according to claim 7.

9. A redox-flow battery system comprising the battery cell according to claim 7 or the cell stack according to claim 8.

10. The redox-flow battery system according to claim 9, comprising:
a positive electrolyte and a negative electrolyte that are supplied to the battery cell, wherein
the positive electrolyte includes manganese ions, and
the negative electrolyte includes titanium ions.
